(19) Europäisches Patentamt
European Patent Office
Office européen des brevets

(11) **EP 1 745 975 A1**

(12) **DEMANDE DE BREVET EUROPEEN**

(43) Date de publication:
**24.01.2007 Bulletin 2007/04**

(51) Int Cl.:
***B60K 31/04*** *(2006.01)*

(21) Numéro de dépôt: **06300799.1**

(22) Date de dépôt: **12.07.2006**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **18.07.2005 FR 0552228**

(71) Demandeur: **PEUGEOT CITROËN AUTOMOBILES S.A.**
**78140 Velizy Villacoublay (FR)**

(72) Inventeur: **Lesur, M. Ludovic, Peugeot Citroen Automobiles SA**
**92500 Rueil Malmaison (FR)**

(74) Mandataire: **Fernandez, Francis Lionel**
**PSA Peugeot Citroën**
**Département Propriété Industrielle - VPI/BLE**
**18 Rue des Fauvelles**
**92250 La Garenne Colombes (FR)**

(54) **Procédé et dispositif de limitation du temps intervéhicule**

(57) - on mesure, à chaque instant, la distance (d) entre un premier véhicule (1) et un second véhicule (2) qui précède le premier,

- on mesure au même instant la vitesse (V1) du premier véhicule (1),

- on divise ladite distance inter véhicule (d) par ladite vitesse du premier véhicule (V1) afin d'obtenir un temps intervéhicule(TIV) instantané,

- on compare ledit temps intervéhicule instantané (TIV) à une valeur de temps intervéhicule de référence (TSEUIL), et

- on limite le couple du moteur dudit premier véhicule (1) dès que le temps intervéhicule instantané (TIV) atteint ladite valeur de temps intervéhicule référence (TSEUIL).

- Equipements de sécurité des véhicules automobiles.

Fig.1

## Description

La présente invention se rapporte à un procédé et à un dispositif de limitation du temps intervéhicule. Elle se rapporte également au couplage d'un tel dispositif avec le système de limitation de la vitesse du véhicule ainsi équipé.

On connaît le dispositif de limitation de la vitesse d'un véhicule automobile ou routier.

Le limiteur de vitesse est un dispositif déconnectable qui empêche de dépasser une vitesse enregistrée par le conducteur. Le conducteur reste libre de maintenir son accélération. Le limiteur comporte des moyens donnant à la pédale d'accélérateur une première course active jusqu'à un point dur. En permanence le système compare la vitesse du véhicule avec la vitesse enregistrée par le conducteur et lorsque celle-ci est atteinte le système limite l'accélération afin de na pas dépasser ladite vitesse enregistrée. Le passage du point dur permet au conducteur d'outrepasser la limitation imposée par le système.

Un dispositif de limitation de vitesse n'empêche pas le conducteur du véhicule de rouler en deçà des distances de sécurité, lesquelles correspondent à un temps intervéhicule en deçà d'un certain seuil généralement préconisé de deux secondes.

Plus précisément, le temps intervéhicule (TIV) est défini comme le temps mis par un véhicule pour parcourir la distance séparant l'avant du véhicule de l'arrière du véhicule précédent sur la même voie.

Selon le brevet français 2 194 162, il est connu d'utiliser un capteur de distance d'obstacle pour construire avec d'autres moyens de mesure, tels que des capteurs de vitesse, de poids, de pression, de vibrations, de contraintes, et différents détecteurs des conditions de la route, un système de sécurité avec dispositif de surveillance des paramètres. Ce système est sans action automatique sur la marche du véhicule automobile.

On connaît également, selon le brevet des Etats-Unis d'Amérique n° 4,692,764, un système de freinage commandé pour véhicule automobile. Lorsqu'il est monté sur un véhicule, le système mesure la distance entre le véhicule équipé et n'importe quel véhicule ou obstacle qui le précède et émet un signal d'alarme quand cette distance est inférieure à une valeur prédéterminée. Lorsque cette distance diminue encore, elle atteint une valeur prédéterminée dite distance de freinage, une alarme de freinage est activée, et un freinage commandé, proportionnel à la vitesse de changement de la distance par rapport au temps, commence. La valeur réelle de la distance est affichée en permanence. Un freinage supplémentaire est obtenu en appliquant une force de freinage plus grande sur la pédale de frein conventionnelle tandis qu'un bouton dit bouton d'urgence peut être utilisé pour mettre entièrement hors service le freinage automatique. Parce qu'il est un système de freinage essentiellement, ce dispositif ne permet pas de modifier la vitesse du véhicule pour respecter une distance de sécurité, a fortiori un temps intervéhicule.

On connaît également, selon le brevet des Etats-Unis d'Amérique n° 4,706,195, un système de commande ou de régulation de vitesse d'un véhicule automobile, qui commande une soupape d'étranglement pour permettre au véhicule de rouler toujours à une vitesse prédéterminée souhaitée. Le système comporte un radar à laser qui permet de détecter l'existence d'un véhicule qui précède et de mesurer la distance à laquelle il se trouve, et un calculateur électronique de commande dans lequel une distance de référence donnée en fonction de la vitesse du véhicule est réglée. Quand la distance qui sépare le véhicule de celui qui précède est plus grande que la distance de référence donnée, le calculateur réduit la vitesse prédéterminée souhaitée dans le cas où la proximité avec le véhicule précédent est constatée plusieurs fois de façon continue et le calculateur augmente la vitesse prédéterminée souhaitée dans le cas où aucune proximité n'est constatée, et quand la distance est inférieure à la distance de référence donnée, le calculateur décélère le véhicule en commandant directement la soupape d'étranglement dans le sens de la fermeture, permettant ainsi au véhicule de suivre le véhicule précédent avec une distance de référence prédéterminée.

Mais plus que la distance, c'est l'intervalle de temps insuffisant séparant le passage de l'arrière d'un véhicule à l'avant du véhicule suivant qui constitue un risque.

Un premier but de la présente invention est de fournir un procédé de limitation du temps intervéhicule, qui empêche un conducteur de suivre de trop près un véhicule qui le précède.

Pour atteindre ce but, le procédé selon l'invention comporte les étapes suivantes :

- on mesure, à chaque instant, la distance entre l'avant du véhicule équipé (appelé dans la suite du texte : « le premier véhicule ») et l'arrière du véhicule qui le précède (appelé dans la suite du texte : « le second véhicule »),

- on mesure, au même instant, la vitesse instantanée du premier véhicule,

- on divise ladite distance mesurée entre les deux véhicules par ladite vitesse instantanée du premier véhicule afin d'obtenir un temps intervéhicule instantané,

- on compare ledit temps intervéhicule instantané à une valeur de temps intervéhicule de référence, et

- on limite le couple du moteur dudit premier véhicule dès que le temps intervéhicule instantané atteint ladite valeur de temps intervéhicule de référence.

Un autre but de la présente invention est de fournir un procédé de limitation du temps intervéhicule, couplé au procédé, connu en soi, de limitation de vitesse. En effet, la distance de sécurité est d'autant plus grande que la vitesse est élevée ; par conséquent, la limitation à la fois du temps intervéhicule et de la vitesse va dans le sens d'une sécurité routière renforcée.

Pour atteindre ce but, le procédé selon l'invention comporte les étapes suivantes :

- on mesure, à chaque instant, la distance entre l'avant du premier véhicule et l'arrière du second véhicule qui le précède,

- on mesure au même instant la vitesse instantanée du premier véhicule,

- on divise ladite distance mesurée entre les deux véhicules par ladite vitesse instantanée du premier véhicule, afin d'obtenir un temps interváhicule instantané,

- on compare ledit temps interváhicule instantané à une valeur de temps intervéhicule de référence prédéterminée, et ladite vitesse instantanée du premier véhicule à une valeur de vitesse de référence prédéterminée, et

- on limite le couple du moteur dudit premier véhicule dès que le temps interváhicule instantané atteint ladite valeur de temps interváhicule de référence et/ou la vitesse instantanée du premier véhicule atteint ladite valeur de vitesse de référence.

De préférence, un signal est adressé à l'interface homme machine dudit premier véhicule pour informer, par l'intermédiaire dudit interface, le conducteur dudit premier véhicule de la limitation de couple moteur en cours.

De préférence également, ladite valeur de temps intervéhicule prédéterminée de référence et ladite valeur de vitesse prédéterminée de référence sont enregistrées par le conducteur au moyen de ladite interface homme machine.

Un autre but de la présente invention est de réaliser un dispositif de limitation du temps intervéhicule pour la mise en oeuvre du procédé selon l'invention. Pour cela, le dispositif selon la présente invention comporte :

- un moyen de mesure de la distance entre l'avant dudit premier véhicule et l'arrière dudit second véhicule,

- un moyen de mesure de la vitesse instantanée du premier véhicule,

- un calculateur électronique sur le premier véhicule pour calculer le temps interváhicule instantané en fonction des mesures obtenues sur ledit moyen de mesure de distance et ledit moyen de mesure de vitesse, et comparer ledit temps interváhicule instantané à une valeur de temps intervéhicule de référence, et envoyer un signal de limitation du couple moteur dudit premier véhicule dès que le temps interváhicule instantané atteint ladite valeur de temps intervéhicule de référence.

Un autre but de la présente invention est de réaliser un dispositif de limitation du temps intervéhicule, couplé au dispositif, connu en soi, de limitation de vitesse du véhicule. Pour cela, le dispositif selon la présente invention comporte :

- un moyen de mesure de distance de la distance entre l'avant du premier véhicule et l'arrière du second véhicule, qui précède le premier,

- un moyen de mesure de vitesse de la vitesse instantanée du premier véhicule,

- un calculateur électronique sur le premier véhicule pour calculer le temps interváhicule instantané en fonction des mesures obtenues sur ledit moyen de mesure de distance et ledit moyen de mesure de vitesse, et comparer ledit temps interváhicule instantané à une valeur de temps intervéhicule de référence, et la vitesse instantanée du premier véhicule à une valeur de vitesse de référence prédéterminée, et envoyer un signal de limitation du couple moteur dudit premier véhicule dès que le temps interváhicule instantané atteint ladite valeur de temps interváhicule de référence et/ou la vitesse instantanée du premier véhicule atteint ladite valeur de vitesse de référence.

Selon un mode préféré de réalisation de l'invention, le moyen de mesure de distance de la distance entre l'avant dudit premier véhicule et l'arrière dudit second véhicule est un capteur de distance monté à l'avant dudit premier véhicule.

De préférence, ledit capteur de distance est un capteur à émission de faisceau laser de type « Lidar ».

De manière préférentielle également, ledit signal de limitation du couple moteur dudit premier véhicule est un signal adressé par ledit calculateur central à un calculateur de contrôle moteur monté sur ledit premier véhicule.

D'autres buts, avantages et caractéristiques de l'invention apparaîtront dans la description qui suit d'un exemple de réalisation de l'invention, non limitatif de la portée de la présente invention, et accompagnée d'un dessin qui représente de manière schématique le limiteur de temps intervéhicule selon l'invention.

Le véhicule de référence générale 1 désigné « premier véhicule » est le véhicule équipé du système limiteur de temps selon l'invention.

Le véhicule 2 est le véhicule, désigné « second véhicule », est le « véhicule cible », qui précède le véhicule 1, dans sa voie de circulation. A l'avant du véhicule 1 est installé un capteur de distance 3, qui permet de mesurer la distance référencée « d » entre l'avant du véhicule 1 et l'arrière du véhicule 2. A titre d'exemple, le capteur de distance 3 utilise un faisceau laser dit faisceau LIDAR (acronyme pour « Light Detection and Ranging »), référencé 4.

Un capteur de vitesse 9 est monté sur le véhicule 1 pour calculer la vitesse instantanée V1 du véhicule 1.

Sur le véhicule 1 se trouvent également un calculateur électronique central 6, programmé, de manière connue en soi, pour effectuer les calculs et comparaisons propres aux procédés de l'invention, une interface homme machine 8 qui permet au conducteur d'enregistrer des données souhaitées de référence, telles que la vitesse maximale VMAX et le temps intervéhicule TSEUIL de référence, et le calculateur de contrôle moteur 7, qui gère l'allumage et l'injection du moteur, et qui peut, par conséquent limiter le couple moteur.

Le temps intervéhicule instantané est calculé selon la formule suivante :

$$TIV = d \ / \ V1$$

Cette valeur du temps intervéhicule instantané TIV, obtenue à partir de la distance intervéhicule instantanée d et de la vitesse instantanée au même instant V1, est réalisée, de manière connue en soi, par un dispositif électronique qui est, de préférence intégré au calculateur central référencé 6. Il s'agit d'un processus itératif de mesures instantanées, rendu possible par les mesures en continu de V1 et TIV, et le fonctionnement en continu du calculateur 6 programmé. Le conducteur règle le seuil de temps intervéhicule TSEUIL en deçà duquel il ne souhaite pas rouler avec l'interface homme machine référencé 8 du véhicule 1., laquelle valeur est transmise au moyen de comparaison intégré au calculateur 6. L'interface homme machine 8 est le moyen d'échange entre le véhicule et ses occupants ou intervenants.

Le calculateur 6, qui intègre un moyen de comparaison ou comparateur, sous forme d'un élément de programmation par exemple, compare ensuite la valeur instantanée de TIV avec la valeur de TSEUIL et si cette valeur instantanée de TIV est égale à TSEUIL, le calculateur 6 informe le calculateur de contrôle moteur (CCM), référencé 7, de limiter le couple du moteur pour ne pas que le TIV passe en dessous de TSEUIL. En parallèle, le conducteur est informé par l'interface homme machine 8 de la limitation en cours du TIV.

Le CCM est le boîtier électronique embarqué, connu en soi, qui assure la gestion de l'allumage et parfois de l'injection du moteur du véhicule.

Si le conducteur outrepasse le point dur de la pédale d'accélération 5, le système stoppe la limitation du couple moteur et le conducteur reprend le contrôle du véhicule.

La présente invention concerne également le couplage des deux fonctions de limitation de vitesse du véhicule et de temps inter véhicule. Dans un tel système avec couplage des deux fonctions, le conducteur enregistre deux valeurs de consigne : une vitesse maximale VMAX à ne pas dépasser et, comme c'est le cas dans la description qui précède un temps minimal TSEUIL intervéhicule en deçà duquel il ne souhaite pas rouler. Ces deux enregistrements sont effectués à l'aide de l'interface homme machine 8 du véhicule 1 et envoyés au calculateur.

Le calculateur compare les valeurs de TIV et de V1, mesurées de manière similaire à celle déjà décrite précédemment, à TSEUIL et VMAX, respectivement ; Si une des deux limites est atteinte, le calculateur 6 informe le CCM 7 de limiter le couple du moteur pour ne pas dépasser cette limite. En parallèle, un signal est envoyé à l'interface homme machine 8 pour informer le conducteur de la limitation en cours.

Il va de soi que les moyens de calcul électronique de la valeur instantanée du temps intervéhicule TIV par l'opération de division, le moyen de comparaison de ladite valeur de TIV avec TSEUIL et de comparaison de la vitesse instantanée V1 du véhicule 1 avec VMAX, sont parties intégrantes du calculateur central 6, mais pourraient être des moyens distincts sur le véhicule 1.

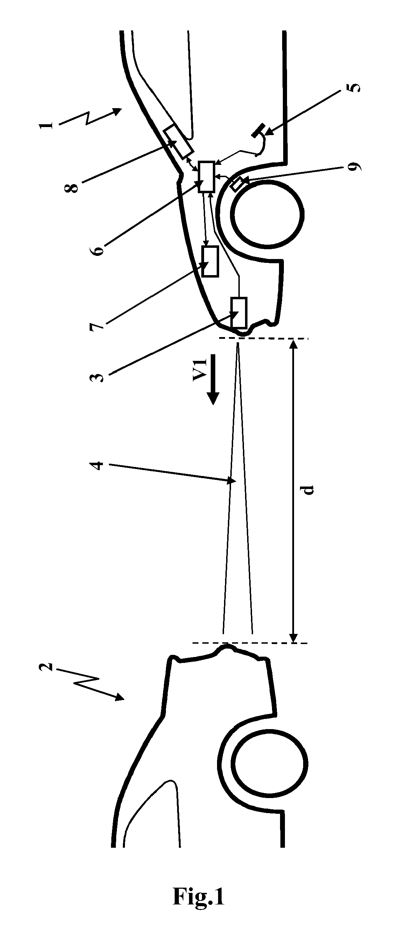

**Revendications**

1. Procédé de limitation du temps intervéhicule entre un premier véhicule (1) et un second véhicule (2) qui précède le premier, **caractérisé par** les étapes suivantes :

   - on mesure, à chaque instant, la distance (d) entre l'avant dudit premier véhicule (1) et l'arrière dudit second véhicule (2),
   - on mesure au même instant la vitesse (V1) du premier véhicule,
   - on divise ladite distance (d) par ladite vitesse (V1) du premier véhicule (1) afin d'obtenir un temps intervéhicule (TIV) instantané,
   - on compare ledit temps intervéhicule instantané (TIV) à une valeur de temps intervéhicule de référence (TSEUIL), et
   - on limite le couple du moteur dudit premier véhicule (1) dès que le temps intervéhicule instantané (TIV) atteint ladite valeur de temps intervéhicule de référence (TSEUIL).

2. Procédé de limitation du temps intervéhicule entre un premier véhicule (1) et un second véhicule (2) qui précède le premier, et de limitation de la vitesse dudit premier véhicule, **caractérisé par** les étapes suivantes :

- on mesure, à chaque instant, la distance (d) entre l'avant dudit premier véhicule (1) et l'arrière dudit second véhicule (2),
- on mesure au même instant la vitesse (V1) instantanée du premier véhicule (1),
- on divise ladite distance (d) par ladite vitesse instantanée (V1) du premier véhicule afin d'obtenir un temps intervéhicule (TIV) instantané,
- on compare ledit temps intervéhicule instantané (TIV) à une valeur de temps intervéhicule de référence (TSEUIL) prédéterminée, et la vitesse (V1) instantanée du premier véhicule à une valeur de vitesse de référence (VMAX) prédéterminée, et
- on limite le couple du moteur dudit premier véhicule (1) dès que le temps intervéhicule instantané (TIV) atteint ladite valeur de temps intervéhicule de référence (TSEUIL) et/ou la vitesse (V1) instantanée du premier véhicule atteint ladite valeur de vitesse de référence (VMAX).

**3.** Procédé selon l'une quelconque des revendications 1 et 2, **caractérisé en ce que**, de plus, un signal est adressé à une interface homme machine (8) dudit premier véhicule (1) pour informer le conducteur dudit premier véhicule (1) de la limitation de couple moteur en cours.

**4.** Procédé selon les revendications 1 à 3, **caractérisé en ce que** ladite valeur de temps intervéhicule de référence (TSEUIL) est enregistrée par le conducteur au moyen de ladite interface homme machine (8).

**5.** Procédé selon les revendications 2 et 3, **caractérisé en ce que** ladite valeur de vitesse de référence (VMAX) est enregistrée par le conducteur au moyen de ladite interface homme machine (8).

**6.** Dispositif de limitation du temps intervéhicule pour la mise en oeuvre du procédé de la revendication 1, **caractérisé en ce qu'**il comporte :

- un moyen de mesure de distance (3) de la distance (d) entre l'avant dudit premier véhicule (1) et l'arrière dudit second véhicule (2),
- un moyen de mesure de vitesse (9) de la vitesse instantanée (V1) du premier véhicule (1),
- un calculateur électronique 6 sur le premier véhicule (1) pour calculer le temps intervéhicule instantané (TIV) en fonction des mesures obtenues sur ledit moyen de mesure de distance (3) et ledit moyen de mesure de vitesse (9), et comparer ledit temps intervéhicule instantané (TIV) obtenu à une valeur de temps intervéhicule de référence (TSEUIL), et envoyer un signal de limitation du couple moteur dudit premier véhicule (1) dès que le temps intervéhicule instantané (TIV) atteint ladite valeur de temps intervéhicule de référence (TSEUIL).

**7.** Dispositif de limitation du temps intervéhicule pour la mise en oeuvre du procédé de la revendication 2, **caractérisé en ce qu'**il comporte :

- un moyen de mesure de distance (3) de la distance (d) entre l'avant dudit premier véhicule (1) et l'arrière dudit second véhicule (2),
- un moyen de mesure de vitesse (9) de la vitesse instantanée (V1) du premier véhicule (1),
- un calculateur électronique (6) sur le premier véhicule (1) pour calculer le temps intervéhicule instantané (TIV) en fonction des mesures obtenues sur ledit moyen de mesure de distance (3) et ledit moyen de mesure de vitesse (9), et comparer ledit temps intervéhicule instantané (TIV) obtenu à une valeur de temps intervéhicule de référence (TSEUIL), et la vitesse (V1) instantanée du premier véhicule à une valeur de vitesse de référence (VMAX) prédéterminée, et envoyer un signal de limitation du couple moteur dudit premier véhicule (1) dès que le temps intervéhicule instantané (TIV) atteint ladite valeur de temps intervéhicule de référence (TSEUIL) et/ou la vitesse (V1) instantanée du premier véhicule atteint ladite valeur de vitesse de référence (VMAX).

**8.** Dispositif selon l'une quelconque des revendications 6 et 7, **caractérisé en ce que** le moyen de mesure de distance (3) de la distance (d) entre l'avant dudit premier véhicule (1) et l'arrière dudit second véhicule (2) est un capteur de distance monté à l'avant dudit premier véhicule.

**9.** Dispositif selon la revendication 8, **caractérisé en ce que** ledit capteur de distance (3) est un capteur à émission de faisceau laser de type « Lidar ».

**10.** Dispositif selon l'une quelconque des revendications 6 et 7, **caractérisé en ce que** ledit signal de limitation du couple moteur dudit premier véhicule (1) est un signal adressé par ledit calculateur central (6) à un calculateur de contrôle moteur (7) dudit premier véhicule (1).

**Fig.1**

**Office européen des brevets**

## RAPPORT DE RECHERCHE EUROPEENNE

Numéro de la demande

EP 06 30 0799

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 1 031 521 A (FUJI PHOTO FILM CO., LTD; FUJI PHOTO OPTICAL CO., LTD; FUJINON CORPORA) 30 août 2000 (2000-08-30) | 1,2,5-10 | INV. B60K31/04 |
| Y | * le document en entier * ----- | 3,4 | |
| X | EP 0 612 641 A (LUCAS INDUSTRIES PUBLIC LIMITED COMPANY) 31 août 1994 (1994-08-31) | 1,2,5-8 | |
| Y | * le document en entier * ----- | 3,4 | |
| Y | HORST BAUER ET AL.: "Kraftfahrtechnisches Taschenbuch" 1999, ROBERT BOSCH GMBH, VIEWEG , BRAUNSCHWEIG; WIESBADEN , XP002376511 * pages 714,715 * ----- | 3,4 | |

DOMAINES TECHNIQUES RECHERCHES (IPC)

B60K

Le présent rapport a été établi pour toutes les revendications

| Lieu de la recherche | Date d'achèvement de la recherche | Examinateur |
|---|---|---|
| Munich | 11 septembre 2006 | Plenk, Rupert |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

&  : membre de la même famille, document correspondant

EPO FORM 1503 03.82 (P04C02)

**Office européen
des brevets**

Numéro de la demande

EP 06 30 0799

## REVENDICATIONS DONNANT LIEU AU PAIEMENT DE TAXES

La présente demande de brevet européen comportait lors de son dépôt plus de dix revendications

☐ Une partie seulement des taxes de revendication ayant été acquittée dans les délais prescrits, le présent rapport de recherche européenne a été établi pour les dix premières revendications ainsi que pour celles pour lesquelles les taxes de revendication ont été acquittées, à savoir les revendication(s):

☐ Aucune taxe de revendication n'ayant été acquittée dans les délais prescrits, le présent rapport de recherche européenne a été établi pour les dix premières revendications.

## ABSENCE D'UNITE D'INVENTION

La division de la recherche estime que la présente demande de brevet européen ne satisfait pas à l'exigence relative à l'unité d'invention et concerne plusieurs inventions ou pluralités d'inventions, à savoir:

```
voir feuille supplémentaire B
```

☐ Toutes les nouvelles taxes de recherche ayant été acquittées dans les délais impartis, le présent rapport de recherche européenne a été établi pour toutes les revendications.

☒ Comme toutes les recherches portant sur les revendications qui s'y prêtaient ont pu être effectuées sans effort particulier justifiant une taxe additionnelle, la division de la recherche n'a sollicité le paiement d'aucune taxe de cette nature.

☐ Une partie seulement des nouvelles taxes de recherche ayant été acquittée dans les délais impartis, le présent rapport de recherche européenne a été établi pour les parties qui se rapportent aux inventions pour lesquelles les taxes de recherche ont été acquittées, à savoir les revendications:

☐ Aucune nouvelle taxe de recherche n'ayant été acquittée dans les délais impartis, le présent rapport de recherche européenne a été établi pour les parties de la demande de brevet européen qui se rapportent à l'invention mentionnée en premier lieu dans les revendications, à savoir les revendications:

**Office européen**

**des brevets**

**ABSENCE D'UNITÉ D'INVENTION**
**FEUILLE SUPPLÉMENTAIRE B**

La division de la recherche estime que la présente demande de brevet européen ne satisfait pas à l'exigence relative à l'unité d'invention et concerne plusieurs inventions ou pluralités d'inventions, à savoir :

1. revendications: 1,3-6,8-10

   limitation du temps intervéhicule sans regardant une limitation de vitesse
   ---

2. revendications: 2,7

   limitation de la vitesse d'un véhicule sans regardant un temps intervéhicule
   ---

EPO FORM P0402

**ANNEXE AU RAPPORT DE RECHERCHE EUROPEENNE
RELATIF A LA DEMANDE DE BREVET EUROPEEN NO.**

EP 06 30 0799

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

11-09-2006

| Document brevet cité au rapport de recherche | | Date de publication | Membre(s) de la famille de brevet(s) | | Date de publication |
|---|---|---|---|---|---|
| EP 1031521 | A | 30-08-2000 | DE | 60022562 D1 | 20-10-2005 |
| | | | DE | 60022562 T2 | 26-01-2006 |
| | | | US | 6274846 B1 | 14-08-2001 |
| EP 0612641 | A | 31-08-1994 | DE | 69403238 D1 | 26-06-1997 |
| | | | DE | 69403238 T2 | 02-10-1997 |
| | | | ES | 2104271 T3 | 01-10-1997 |
| | | | US | 5495251 A | 27-02-1996 |

EPO FORM P0460

Pour tout renseignement concernant cette annexe : voir Journal Officiel de l'Office européen des brevets, No.12/82

**EP 1 745 975 A1**

**RÉFÉRENCES CITÉES DANS LA DESCRIPTION**

**Documents brevets cités dans la description**

- FR 2194162